(19) **Europäisches Patentamt**
**European Patent Office**
**Office européen des brevets**

(11) **EP 4 354 345 A1**

(12) **EUROPEAN PATENT APPLICATION**

(43) Date of publication:
**17.04.2024  Bulletin 2024/16**

(21) Application number: **22217017.7**

(22) Date of filing: **28.12.2022**

(51) International Patent Classification (IPC):
**G06N 3/045** (2023.01)        **G06N 3/0464** (2023.01)
**G06N 3/082** (2023.01)        **G06N 3/084** (2023.01)
**G06N 3/09** (2023.01)

(52) Cooperative Patent Classification (CPC):
**G06N 3/082; G06N 3/045; G06N 3/0464;**
**G06N 3/084; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.10.2022  NL 2033263**
**19.12.2022  NL 2033752**

(71) Applicant: **NavInfo Europe B.V.**
**5657 DB Eindhoven (NL)**

(72) Inventors:
• **SARFRAZ, Fahad**
**5657 DB Eindhoven (NL)**
• **ARANI, Elahe**
**5657 DB Eindhoven (NL)**
• **ZONOOZ, Bahram**
**5657 DB Eindhoven (NL)**

(74) Representative: **van Breda, Jacobus**
**Octrooibureau Los & Stigter B.V.**
**P.O. Box 20052**
**1000 HB Amsterdam (NL)**

Remarks:
Amended claims in accordance with Rule 137(2) EPC.

(54) **SPARSE CODING IN A DUAL MEMORY SYSTEM FOR LIFELONG LEARNING**

(57)    A computer-implemented method that encourages sparse coding in deep neural networks and mimics the interplay of multiple memory systems for maintaining a balance between stability and plasticity. To this end, the method comprises a multi-memory experience replay mechanism that employs sparse coding. The method comprises the step of enforcing activation sparsity along with a complementary dropout mechanism, which encourages the model to activate similar neurons for semantically similar inputs while reducing the overlap with activation patterns of semantically dissimilar inputs. The proposed semantic dropout provides an efficient mechanism for balancing reusability and interference of features depending on the similarity of classes across tasks. Furthermore, the method comprises the step of maintaining an additional long-term semantic memory that aggregates the information encoded in the synaptic weights of the working memory. the method comprises the step of maintaining an additional long-term semantic memory that aggregates the information encoded in the synaptic weights of the working memory.

Fig. 1

Processed by Luminess, 75001 PARIS (FR)

**Description**

The invention relates to a computer-implemented method for continual learning in an artificial neural network for mitigating catastrophic forgetting while maintaining a balance between stability and plasticity.

**General Description**

The ability to continually acquire, consolidate, and retain knowledge is a hallmark of intelligence. Particularly, as we look to deploy deep neural networks (DNNs) in the real world, it is essential that learning agents continuously interact and adapt to the ever-changing environment. An autonomous car, for instance, needs to continually adapt to different road, weather, and lighting conditions, learn new traffic signs and lane marking as we move from one place to another.

Standard DNNs are not designed for lifelong learning and exhibit catastrophic forgetting of previously learned knowledge when required to learn tasks sequentially from a stream of data. The core challenge in continual learning (CL) in DNNs is maintaining an optimal balance between plasticity and the stability of the model. Ideally, the model should be stable enough to retain previous knowledge while also plastic enough to acquire and consolidate new knowledge.

Catastrophic forgetting in DNNs can be attributed to the lack of stability. Among the approaches proposed to address the issue, Rehearsal-based methods [4, 27] which aim to reduce forgetting by continual rehearsal of previously seen tasks, have proven to be an effective approach in challenging CL tasks [11]. They attempt to approximate the joint distribution of all the observed tasks by saving samples from previous tasks in a memory buffer and intertwine the training of the new task with samples from memory.

However, because of the limited buffer size, it is difficult to approximate the joint distribution with the samples alone. There is an inherent imbalance between the samples from previous tasks and the current task. This results in the network update being biased towards the current task, leading to forgetting and recency bias in predictions. Therefore, more information from the previous state of the model is needed to approximate the joint distribution better and constrain the update of the model to preserve the learned knowledge. However, it is still an open question what the optimal information is for replay and how to extract and preserve it.

The different approaches to address the problem of catastrophic forgetting in CL can be broadly divided into three categories: Regularization-based methods regularize the update of the model in the parameter space [10, 18, 28, 34] or the functional space [21, 26], Dynamic architecture expands the network to dedicate a distinct set of parameters to each task, and Rehearsal-based methods [4, 27] mitigate forgetting by maintaining an episodic memory buffer and continual rehearsal of samples from previous tasks.

Rehearsal-based approaches have been proven to be effective in challenging continual learning scenarios [11]. The base method, Experience Replay (ER) [27], interleaves the training of the current task with the memory sample to train the model on the approximate joint distribution of tasks. Several studies focus on the different aspect of rehearsal: memory sample selection [15, 22], sample retrieval from memory [3] and what information to extract and replay from the previous model [9, 21]. Additionally, knowledge distillation [35] has been proven to be an effective approach for providing additional information from the previous model state. The consistency in predictions of soft-targets can assist ER in preserving information pertaining to previous tasks better as soft-targets capture the rich similarity structure of the data [8]. Dark Experience Replay (DER++) samples the output logits along with the samples in the memory buffer throughout the training trajectory and applies a consistency loss on the update of the model. Task Agnostic Representation Consolidation (TARC) [36] employs a two-stage training paradigm that intertwines task-agnostic and task-specific learning whereby self-supervised training is followed by supervised learning for each task.

Recently, the Complementary Learning Systems (CLS) theory has inspired a number of approaches that utilize multiple memory systems [25, 31, 32] and shows the benefits of multiple systems in CL. Complementary Learning Systems-Experience Replay (CLS-ER) [5] mimics the interplay between fast and slow learning systems by maintaining two additional semantic memories that aggregate the weights of the working model at different timescales using an exponential moving average. SYNERgy [29] creates a synergy between synaptic consolidation and dual memory Experience Replay by tracking the importance of parameters during the training trajectory and anchoring them to the consolidated parameters in the semantic memory which aggregates information across the tasks.

US2021150345 disclosed "Conditional Channel Gated Networks for Task-Aware Continual Learning", referred hereon as CCGN.

CCGN can be categorized more generally as a conditional computational network which adapts their architecture to the input. The method of CCGN comprises using separate task specific gating modules (networks) to select which channels should be used/activated. This is the source of activation sparsity in the method of CCGN. Furthermore, CCGN comprises utilizing multiple classification head for each task and corresponding task specific gating modules which necessitate the information about the task label to select the correct gating module to select the filters and finally the correct classification head to make prediction. This makes the method of CCGN specialized for Task Incremental Learning. CCGN tries to extend the method to Class Incremental Learning by using another network to predict the class label, but it isn't effective. Additionally, since the method of CCGN enforces strict division between tasks (separate classification heads), it cannot be extended to the realistic general continual learning where the classes in each task are not disjoint and can reappear. CCGN also freeze parts of the network at the task boundary and reinitializes the others. This substantially limits the capacity of the model and does not allow backward transfer. Finally, CCGN does not utilize any form of dropout mechanism.

It is an object of the current invention to propose an alternative solution for mitigating catastrophic forgetting in DNNs whereby the network forgets previously learned information when learning a new task. This requires a delicate balance between the stability (ability to retain previous information) and the plasticity (flexibility to learn new information) of the model. This and other objects which will become apparent from the following disclosure, are provided with a computer-implemented method for continual learning in artificial neural networks, a computer-readable medium, and an autonomous vehicle comprising a data processing system, having the features of one or more of the appended claims.

Inspired by sparse coding in the biological brain, the computer-implemented method of the current invention employs a mechanism that encourages sparse coding in DNNs and mimics the interplay of multiple memory systems for maintaining a balance between stability and plasticity. To this end, the method comprises a multi-memory experience replay mechanism that employs sparse coding.

In a first aspect of the invention, the computer-implemented method for continual learning in artificial neural networks comprises the step of training a working memory by using a continuous data stream containing a sequence of tasks wherein the method comprises the steps of:

- maintaining a long-term memory by progressively aggregating synaptic weights of the working memory as tasks are sequentially learned by said working memory;
- maintaining an instance-based episodic memory; and
- enforcing activation sparsity along with a complementary dropout mechanism by activating similar neurons for semantically similar tasks while reducing overlap among neural activations for samples belonging to different tasks.

These features enable the computer-implemented method of the current invention to enforce sparse coding for efficient representation and utilization of multiple memories.

Advantageously, the method comprises the step of initializing the long-term memory by using weights, values, and sparsity constraints of the working memory. And, the step of maintaining a long-term memory by aggregating the synaptic weights of the working memory comprises the step of calculating an exponentially moving average of the synaptic weights of the working memory in a stochastic manner.

The method comprises the step of assigning a fixed size to instance-based episodic memory.

The step of maintaining an episodic memory comprises the step of maintaining said episodic memory with reservoir sampling by assigning to each incoming sample of the continuous data stream equal probability of being represented in the episodic buffer.

The method comprises the steps of interleaving samples from a current task, with random samples from the episodic memory.

The method comprises the step of training the working memory by combining a cross-entropy loss on the interleaved samples with a knowledge retrieval loss on the random samples from the episodic memory.

Suitably, the step of training the working memory is followed by the step of stochastically updating the long-term memory.

The method of the current invention comprises the step of employing a k-winner-take-all activation function wherein an activation score is assigned to each filter in a current layer by calculating an absolute sum of an activation map of said current layer and by propagating the activation map of top-k filters to a next layer while setting the activation map of non-propagated filters to zero.

This enforces global sparsity, whereby each stimulus is processed by only a selected set of convolution filters in each layer, which can be considered as a subnetwork.

The method comprises the step of setting a sparsity ratio for each layer of the network wherein earlier layers have a lower sparsity ratio than later layers.

The method of the current invention comprises the step of employing a complementary Semantic Dropout mechanism for controlling the degree of overlap among neural activations of samples belonging to different tasks while also encouraging the samples belonging to the same class to utilize a similar set of neurons.

The method of the current invention comprises the step of utilizing two sets of activation trackers:

a global activity count for tracking the activation count of each neuron throughout the training; and
a class-wise activity count for tracking the activation count of each neuron processing samples belonging to a particular class.

The method comprises the step of employing heterogeneous dropout for each task wherein new classes are learned by using neurons having the lowest class-wise activity count for previously seen classes and by setting a probability of a neuron being dropped to be inversely proportional to the global activity count of said neuron.

The method comprises the step of emerging class-wise activations followed by the step of employing semantic dropout wherein a probability of retention of a neuron for a class is set to be proportional to the class-wise activity count of said neuron for said class.

Advantageously, the method comprises the step of updating probabilities for semantic dropout and heterogeneous dropout at an end of each epoch and each task respectively for enforcing an emerged pattern.

In a second embodiment of the invention, the computer-readable medium is provided with a computer program wherein when said computer program is loaded and executed by a computer, said computer program causes the computer to carry out the steps of the computer-implemented method according to any one of aforementioned steps.

In a third embodiment of the invention, the autonomous vehicle comprising a data processing system loaded with a computer program wherein said program is arranged for causing the data processing system to carry out the steps of the computer-implemented method according to any one of aforementioned steps for enabling said autonomous vehicle to continually adapt and acquire knowledge from an environment surrounding said autonomous vehicle.

The invention will hereinafter be further elucidated with reference to the drawing of an exemplary embodiment of a computer-implemented method, a computer program and an autonomous vehicle comprising a data processing system according to the invention that is not limiting as to the appended claims.

In the drawing:

- figure 1 shows a schematic diagram for the computer-implemented method according to the invention;
- figure 2 shows a schematic diagram for the workings of the computer-implemented method according to the invention.

Whenever in the figures the same reference numerals are applied, these numerals refer to the same parts.

## Detailed description

In the following sections, an overview of motivations from biological systems is presented before introducing the different components of the proposed computer-implemented method according to the invention.

### Continual Learning in the Biological System

Effective continual learning (CL) in the brain is facilitated by a complex set of mechanisms and multiple memory systems. Information in the brain is represented by neural activation patterns, which form a neural code [13]. Specifically, evidence suggests that the brain employs Sparse Coding, whereby sensory events are represented by strong activations of a relatively small set of neurons. A different subset of neurons is utilized for each stimulus [7, 12]. There is a correlation between these sparse codes [20] which might capture the similarity between different stimuli. Sparse codes provide several advantages: they enable faster learning of new associations with controlled interference with previous associations, and they allow efficient maintenance of associative memory while retaining sufficient representational capacity. Another salient feature of the brain is the strong differentiation and specialization of the nervous systems [14]. There is evidence for modularity in the biological systems, which supports functional specialization of brain regions [17] and reduces interference between different tasks. Furthermore, the brain is believed to utilize multiple memory systems [6, 24]. The Complementary Learning Systems (CLS) theory states that efficient learning requires at least two complementary systems. The instance-based hippocampal system rapidly encodes new episodic events into nonoverlapping representations, which are then gradually consolidated into the structured knowledge representation in the parametric neocortical system. The consolidation of information is accompanied by the replay of neural activities which accompanied the learning event.

The encoding of information into efficient sparse codes, the modular and dynamic processing of information, and the interplay of multiple memory systems might play a crucial role in enabling effective CL in the brain. Therefore, the method of the current invention aims to incorporate these components in ANNs.

### Sparse coding in DNNs

The sparse neural codes in the brain are in stark contrast to the highly dense connections and overlapping representations in standard DNNs which are prone to interference. Particularly for CL, sparse representations can reduce the interference between different tasks and therefore result in less forgetting, as there will either be fewer task-sensitive parameters or fewer effective changes to the parameters [1, 16]. Activation sparsity can also lead to the natural emergence of modules without explicitly imposing architectural constraints [14]. Therefore, to mimic sparse coding in DNNs, the method of the current invention comprises the step of enforcing activation sparsity along with a complementary semantic dropout mechanism which encourages the model to activate similar neurons for semantically similar samples.

a) Sparse Activations:

To enforce sparsity in activations, the method of the current invention comprises the step of employing the k-winner-take-all (k-WTA) activation function [23]. k-WTA only retains the top-k largest values of an N × 1 input vector and sets all others to zero before propagating the vector to the next network layer. Importantly, the method of the current invention comprises the step of deviating from the common implementation of k-WTA in convolutional neural networks (CNNs) whereby the activation map of a layer (C × H × W tensor where C is the number of channels and H and W are the spatial dimensions) is flattened into a long CHW × 1 vector input and the k-WTA activation is applied similar to the fully connected network [2, 33]. This implementation does not consider the functional integrity of an individual convolution filter as an independent feature extractor and does not lend itself to the formation of task-specific subnetworks with specialized feature extractors. Instead, the method of the current invention comprises the step of assigning an activation score to each filter in the layer by taking the absolute sum of the corresponding activation map and selecting the top-k filters to propagate to the next layer.

Given the activation map, the method of the current invention comprises the step of flattening the last two dimensions and assigning a score to each filter by taking the absolute sum of the activations. Based on the sparsity ratio for each layer, the activation maps of the filters with higher scores are propagated to the next layers, and the others are set to zero. This enforces global sparsity, whereby each stimulus is processed by only a selected set of convolution filters in each layer, which can be considered as a subnetwork. Advantageously, the role of each layer is considered when setting the sparsity ratio. The earlier layers have a lower sparsity ratio as they learn general features, which can enable higher reusability, and forward transfer to subsequent tasks use a higher sparsity for later layers to reduce the interference between task-specific features.

b) Semantic Dropout:

While the k-WTA activation function enforces the sparsity of activation for each stimulus, it does not encourage semantically similar inputs to have similar activation patterns and it does not reduce overlap with semantically dissimilar inputs. To this end, the method of the current invention comprises the step of employing a complementary Semantic Dropout mechanism for controlling the degree of overlap among neural activations of samples belonging to different tasks while also encouraging the samples belonging to the same class to utilize a similar set of neurons. The method of the current invention comprises the step of utilizing two sets of activation trackers: the global activity counter, $A_g \in R^N$, counts the number of times each neuron has been activated throughout training, whereas the class-wise activity counter, $A_s \in R^{C \times N}$, tracks the number of times each neuron has been active for samples belonging to a particular class. N and C denote the total number of neurons and classes, respectively. For each subsequent task, the method of the current invention comprises the step of first employing Heterogeneous Dropout [1] to encourage the model to learn the new classes by using neurons that have been less active for previously seen classes by setting the probability of a neuron being dropped to be inversely proportional to its activation counts. Concretely, let $[A_g^l]j$ denotes the number of times neuron j in layer l has been activated after learning t sequential tasks. For learning the new classes in task t+1, the probability of retaining this neuron is given by:

$$[P_h^l]_j = exp\left(\frac{-[A_g^l]_j}{\max_i [A_g^l]_i} \pi_h\right) \tag{1}$$

where $\pi_h$ controls the strength of dropout with larger values leading to less overlap between representations. Next, the method of the current invention comprises the step of allowing the network to learn the new task with heterogeneous dropout in place of a fixed number of epochs, $E_h$. During this period, the method of the current invention comprises the steps of emerging the class-wise activations and then employing Semantic Dropout. This feature encourages the model to utilize the same set of neurons by setting the probability of retention of a neuron for each class c as proportional to the number of times it has been activated for that class so far:

$$[P_s^l]_{c,j} = 1 - exp(\frac{-[\mathcal{A}_s^l]_{c,j}}{\max_i [\mathcal{A}_s^l]_{c,i}} \pi_s) \qquad (2)$$

where $\pi_s$ controls the strength of dropout. The probabilities for semantic dropout are updated at the end of each epoch to enforce the emerging pattern. This provides an efficient mechanism for controlling the degree of overlap in representations as well as it enables context specific processing of information which facilitates the formation of semantically conditioned subnetworks. Activation sparsity, together with semantic dropout, also provide an efficient mechanism for balancing the reusability and interference of features depending on the similarity of classes across the tasks.

*Multiple Memory Systems*

Inspired by the interaction of multiple memory systems in the brain, in addition to a fixed size instance-based episodic memory, the method of the current invention comprises the step of building a long-term memory that aggregates the learned information in the working memory.

a) Episodic Memory:

The consolidation of information in the brain is facilitated by replaying the neural activation patterns which accompanied the learning event. To mimic this mechanism, the method of the current invention comprises the step of employing a fixed-size episodic memory buffer, which can be thought of as a very primitive hippocampus. The memory buffer is maintained with Reservoir Sampling, [30] which aims to match the distribution of the data stream by assigning equal probability to each incoming sample.

b) Long-Term Memory:

The aim is to build a long-term semantic memory that can consolidate and accumulate the structural knowledge learned in the working memory throughout the training trajectory. The knowledge acquired in DNNs resides in the learned synaptic weights [5,19]. Therefore, progressively aggregating the weights of the working memory ($\theta_w$) as it sequentially learns tasks leads to consolidating the information efficiently. To this end, the method of the current invention comprises the step of building long-term memory ($\theta_s$) by taking the exponential moving average of the working memory weights in a stochastic manner:

$$\theta_s \leftarrow \alpha\theta_s + (1 - \alpha)\theta_w, \quad if \ r > a \sim U(0, 1) \qquad (3)$$

where $\alpha$ is the decay parameter and r is the update rate.

The long-term memory builds structural representations for generalization and mimics the slow acquisition of structured knowledge in the neocortex of the brain, which can generalize well across tasks. The long-term memory then interacts with the instance-level episodic memory to retrieve structural, relational knowledge for the previous tasks encoded in the output logits. Next, the method of the current invention comprises the step of using the consolidated logits to enforce consistency in the functional space of the working model. This facilitates the consolidation of information by encouraging the acquisition of new knowledge while maintaining the functional relation of the previous knowledge and aligning the decision boundary of working memory with the long-term memory.

*Overall Formulation*

Given a continuous data stream D containing a sequence of tasks (D1, D2, .., DT ), the CL task is to learn the joint distribution of all the observed tasks without the availability of task labels at test times. The method of the current invention comprises the steps of training a working memory $\theta_w$, and maintaining an additional long-term memory $\theta_s$ and an episodic memory M. The long-term memory is initialized with the same parameters as the working memory and has the same sparsity constraints. Thereon, the long-term memory aggregates the weights of working memory. The heterogeneous dropout probabilities $\pi h$ is randomly initialized to set the probability of retention of a fraction of neurons to 1 and others to 0 so that the first task is learned using a few, but sufficient neurons and the remaining can be utilized to learn the subsequent tasks.

During each training step, the method of the current invention comprises the steps of interleaving the batch of samples from the current task $x_t \sim D_t$, with a random batch of exemplars from episodic memory $x_m \sim M$. The working memory is trained with a combination of cross-entropy loss on the interleaved batch, $x \leftarrow (x_t, x_b)$, and knowledge retrieval loss on the exemplars. Thus, the overall loss is given by:

$$\mathcal{L} = \mathcal{L}_{ce}(f(x;\theta_w), y) + \gamma \mathcal{L}_{kr}(f(x_m;\theta_w), f(x_m;\theta_s)) \tag{4}$$

where $\gamma$ controls the strength of the enforcement of consistency, and mean-squared error loss is used for $L_{kr}$. The training step is followed by stochastically updating the long-term memory (Eq. 3). The semantic dropout and heterogeneous dropout probabilities are updated at the end of each epoch and task, respectively (using Eqs. 1 and 3). The method of the current invention comprises the steps of using the long-term memory for inference as it aggregates knowledge and generalizes well across the tasks.

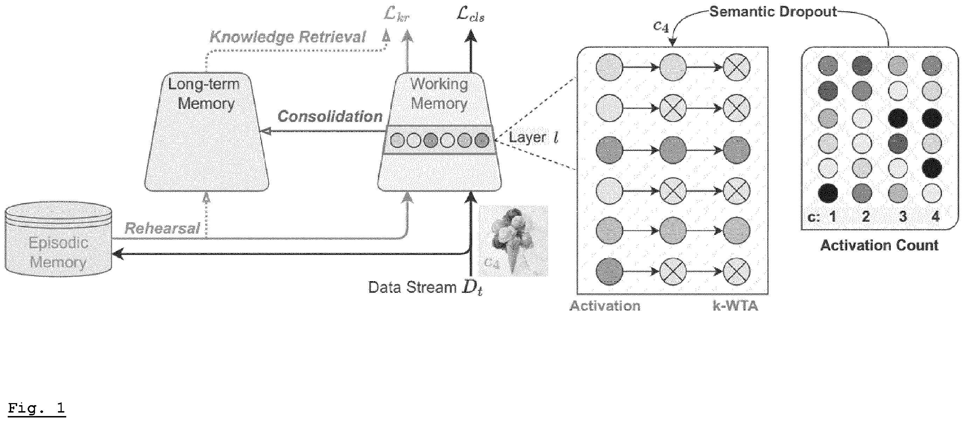

In Figure 1 it is shown how the method of the current invention employs sparse coding in a multi-memory experience replay mechanism. In addition to the instance-based episodic memory, a long-term memory is maintained for consolidating the learned knowledge in the working memory throughout training. The long-term memory interacts with the episodic memory to enforce consistency in the functional space of working memory through the knowledge retrieval loss. To mimic sparse coding in the brain, the method of the invention comprises the step of enforcing activation sparsity along with semantic dropout, whereby the model tracks the class-wise activations during training and utilizes them to enforce sparse code, which encourages the model to activate similar neurons for semantically similar inputs. The schematic shows how the activations from a layer l are propagated to the next layer. Darker shades indicate higher values. Given a sample from class 4, semantic dropout retains the neurons with higher activation counts for the class, and top-k remaining (here 2) neurons with higher activations are propagated to the next layer. This enables the network to form semantically conditioned subnetworks and mitigate forgetting.

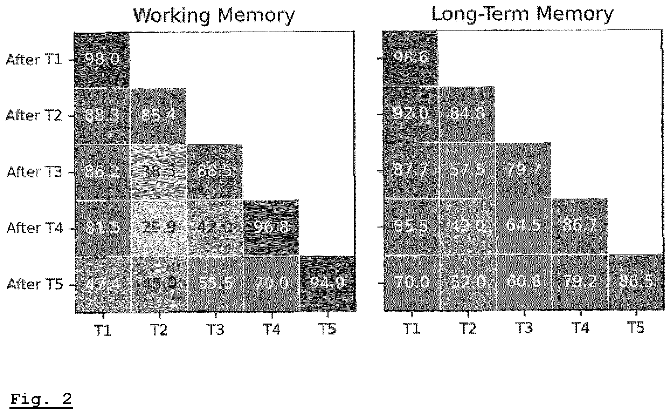

Figure 2 shows the task-wise performance of the working memory and the long-term memory. The long-term memory effectively aggregates knowledge encoded in the working memory and generalizes well across the tasks.

Algorithm 1 provides further training details.

---

**Algorithm 1: SCoMMER Algorithm for Sparse Coding in Multiple Memory Experience Replay System**

**Input:** data stream $\mathcal{D}$; learning rate $\eta$; consistency weight $\gamma$; update rate $r$ and decay parameter $\alpha$, dropout rates $\pi_h$ and $\pi_s$

**Initialize:** $\theta_s = \theta_w$

$\mathcal{M} \leftarrow \{\}$

1: **for** $\mathcal{D}_t \in \mathcal{D}$ **do**
2:     **while** Training **do**
3:         Sample training data: $(x_t, y_t) \sim \mathcal{D}_t$ and $(x_m, y_m) \sim \mathcal{M}$, and interleave $x \leftarrow (x_t, x_m)$
4:         Retrieve structural knowledge: $\mathcal{Z}_s \leftarrow f(x_m;\theta_s)$
5:         Evaluate overall loss loss: $\mathcal{L} = \mathcal{L}_{ce}(f(x;\theta_w), y) + \gamma \mathcal{L}_{kr}(f(x_m;\theta_w), \mathcal{Z}_s)$ (Eq. 4)
6:         Update working memory: $\theta_w \leftarrow \theta_w - \eta \nabla_{\theta_w} \mathcal{L}$
7:         Aggregate knowledge: $\theta_s \leftarrow \alpha \theta_s + (1 - \alpha) \theta_w, \quad if \ r > a \sim U(0,1)$ (Eq. 3)
8:         Update episodic memory: $\mathcal{M} \leftarrow \text{Reservoir}(\mathcal{M}, (x_t, y_t))$
9:         After $\mathcal{E}_h$ epochs, update semantic dropout probabilities at the end of each epoch: $P_s$ (Eq. 2)
10:     Update heterogeneous dropout probabilities: $P_h$ (Eq. 1)
    **return** $\theta_s$

---

Embodiments of the present invention can include every combination of features that are disclosed herein independently from each other.

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

**References:**

[1] Ali Abbasi, Parsa Nooralinejad, Vladimir Braverman, Hamed Pirsiavash, and Soheil Kolouri. Sparsity and heterogeneous dropout for continual learning in the null space of neural activations. arXiv preprint arXiv:2203.06514, 2022.

[2] Subutai Ahmad and Luiz Scheinkman. How can we be so dense? the benefits of using highly sparse representations. arXiv preprint arXiv:1903.11257, 2019.

[3] Rahaf Aljundi, Eugene Belilovsky, Tinne Tuytelaars, Laurent Charlin, Massimo Caccia, Min Lin, and Lucas Page-Caccia. Online continual learning with maximal interfered retrieval. In Advances in Neural Information Processing Systems, pages 11849-11860, 2019.

[4] Rahaf Aljundi, Min Lin, Baptiste Goujaud, and Yoshua Bengio. Gradient based sample selection for online continual learning. In Advances in Neural Information Processing Systems, pages 11816-11825, 2019.

[5] Elahe Arani, Fahad Sarfraz, and Bahram Zonooz. Learning fast, learning slow: A general continual learning method based on complementary learning system. In International Conference on Learning Representations, 2021.

[6] Richard C Atkinson and Richard M Shiffrin. Human memory: A proposed system and its control processes. In Psychology of learning and motivation, volume 2, pages 89-195. Elsevier, 1968.

[7] Alison L Barth and James FA Poulet. Experimental evidence for sparse firing in the neocortex. Trends in neurosciences, 35(6) :345-355, 2012.7

[8] Prashant Bhat, Bahram Zonooz, and Elahe Arani. Consistency is the key to further mitigating catastrophic forgetting in continual learning. arXiv preprint arXiv:2207.04998, 2022.

[9] Sayna Ebrahimi, Suzanne Petryk, Akash Gokul, William Gan, Joseph E Gonzalez, Marcus Rohrbach, et al. Remembering for the right reasons: Explanations reduce catastrophic forgetting. In International Conference on Learning Representations, 2020.

[10] Mehrdad Farajtabar, Navid Azizan, Alex Mott, and Ang Li. Orthogonal gradient descent for continual learning. In International Conference on Artificial Intelligence and Statistics, pages 3762-3773. PMLR, 2020.

[11] Sebastian Farquhar and Yarin Gal. Towards robust evaluations of continual learning. arXiv preprint arXiv:1805.09733, 2018.

[12] Peter Foldiak. Sparse coding in the primate cortex. The handbook of brain theory and neural networks, 2003.

[13] Peter Foldiak and DM Endres. Sparse coding. 2008.

[14] Raia Hadsell, Dushyant Rao, Andrei A Rusu, and Razvan Pascanu. Embracing change: Continual learning in deep neural networks. Trends in cognitive sciences, 24(12) :1028-1040, 2020.

[15] David Isele and Akansel Cosgun. Selective experience replay for lifelong learning. In Proceedings of the AAAI Conference on Artificial Intelligence, volume 32, 2018.

[16] Abhiram Iyer, Karan Grewal, Akash Velu, Lucas Oliveira Souza, Jeremy Forest, and Subutai Ahmad. Avoiding catastrophe: Active dendrites enable multi-task learning in dynamic environments. arXiv preprint arXiv:2201.00042, 2021.

[17] A Kelkar and JD Medaglia. Evidence of brain modularity. Encyclopedia of Evolutionary Psychological Science. Springer, Cham. https://doi. org/10.1007/978-3-319-16999-6_2422-1, 2018.

[18] James Kirkpatrick, Razvan Pascanu, Neil Rabinowitz, Joel Veness, Guillaume Desjardins, Andrei A Rusu, Kieran Milan, John Quan, Tiago Ramalho, Agnieszka Grabska-Barwinska, et al. Overcoming catastrophic forgetting in neural networks. Proceedings of the national academy of sciences, 114(13) :3521-3526, 2017.

[19] Giri P Krishnan, Timothy Tadros, Ramyaa Ramyaa, and Maxim Bazhenov. Biologically inspired sleep algorithm for artificial neural networks. arXiv preprint arXiv:1908.02240, 2019.

[20] Sidney R Lehky, Keiji Tanaka, and Anne B Sereno. Pseudosparse neural coding in the visual system of primates. Communications biology, 4(1):1-12, 2021.

[21] Zhizhong Li and Derek Hoiem. Learning without forgetting. IEEE transactions on pattern analysis and machine intelligence, 40(12):2935-2947, 2017.

[22] David Lopez-Paz and Marc'Aurelio Ranzato. Gradient episodic memory for continual learning. In Advances in neural information processing systems, pages 6467-6476, 2017.

[23] Wolfgang Maass. On the computational power of winner-take-all. Neural computation, 12(11):2519-2535, 2000.

[24] James L McClelland, Bruce L McNaughton, and Randall C O'Reilly. Why there are complementary learning systems in the hippocampus and neocortex: insights from the successes and failures of connectionist models of learning and memory. Psychological review, 102(3):419, 1995.

[25] Quang Pham, Chenghao Liu, and Steven Hoi. Dualnet: Continual learning, fast and slow. Advances in Neural Information Processing Systems, 34:16131-16144, 2021.

[26] Amal Rannen, Rahaf Aljundi, Matthew B Blaschko, and Tinne Tuytelaars. Encoder based lifelong learning. In Proceedings of the IEEE International Conference on Computer Vision, pages 1320-1328, 2017.

[27] Matthew Riemer, Ignacio Cases, Robert Ajemian, Miao Liu, Irina Rish, Yuhai Tu, and Gerald Tesauro. Learning to learn without forgetting by maximizing transfer and minimizing interference. arXiv preprint arXiv:1810.11910, 2018.

[28] Hippolyt Ritter, Aleksandar Botev, and David Barber. Online structured laplace approximations for overcoming catastrophic forgetting. In Advances in Neural Information Processing Systems, pages 3738-3748, 2018.

[29] Fahad Sarfraz, Elahe Arani, and Bahram Zonooz. Synergy between synaptic consolidation and experience replay for general continual learning. arXiv preprint arXiv:2206.04016, 2022.

[30] Jeffrey S Vitter. Random sampling with a reservoir. ACM Transactions on Mathematical Software (TOMS), 11 (1) : 37-57, 1985.

[31] Zifeng Wang, Zizhao Zhang, Sayna Ebrahimi, Ruoxi Sun, Han Zhang, Chen-Yu Lee, Xiaoqi Ren, Guolong Su, Vincent Perot, Jennifer Dy, et al. Dualprompt: Complementary prompting for rehearsal-free continual learning. arXiv preprint arXiv:2204.04799, 2022.

[32] Zifeng Wang, Zizhao Zhang, Chen-Yu Lee, Han Zhang, Ruoxi Sun, Xiaoqi Ren, Guolong Su, Vincent Perot, Jennifer Dy, and Tomas Pfister. Learning to prompt for continual learning. In Proceedings of the IEEE/CVF Conference on Computer Vision and Pattern Recognition, pages 139-149, 2022.

[33] Chang Xiao, Peilin Zhong, and Changxi Zheng. Enhancing adversarial defense by k-winners-take-all. arXiv preprint arXiv:1905.10510, 2019.

[34] Friedemann Zenke, Ben Poole, and Surya Ganguli. Continual learning through synaptic intelligence. Proceedings of machine learning research, 70:3987, 2017.

[35] Sarfraz, Fahad, Elahe Arani, and Bahram Zonooz. "Knowledge distillation beyond model compression." 2020 25th International Conference on Pattern Recognition (ICPR). IEEE, 2021.

[36] Bhat, Prashant, Bahram Zonooz, and Elahe Arani. "Task Agnostic Representation Consolidation: a Self-supervised based Continual Learning Approach." arXiv preprint arXiv:2207.06267 (2022).

**Claims**

1. Computer-implemented method for continual learning in an artificial neural network comprising the step of training a working memory by using a continuous data stream containing a sequence of tasks, **characterized in that** the method comprises the steps of:

   - maintaining a long-term memory by progressively aggregating synaptic weights of the working memory as tasks are sequentially learned by said working memory;
   - maintaining an instance-based episodic memory; and
   - enforcing activation sparsity along with a complementary dropout mechanism by activating similar neurons for semantically similar tasks while reducing overlap among neural activations for samples belonging to different tasks.

2. The computer-implemented method of claim 1, **characterized in that** the method comprises the step of initializing the long-term memory by using weights and sparsity constraints of the working memory.

3. The computer-implemented method of claim 1 or 2, **characterized in that** the step of maintaining a long-term memory by aggregating the synaptic weights of the working memory comprises the step of calculating an exponentially moving average of the synaptic weights of the working memory in a stochastic manner.

4. The computer-implemented method of any one of the preceding claims, **characterized in that** the method comprises the step of assigning a fixed size to the instance-based episodic memory.

5. The computer-implemented method of any one of the preceding claims, **characterized in that** the step of maintaining an episodic memory comprises the step of maintaining said episodic memory with reservoir sampling by assigning to each incoming sample of the continuous data stream equal probability of being represented in the episodic buffer.

6. The computer-implemented method of any one of the preceding claims, **characterized in that** the method comprises the step of interleaving samples from a current task with random samples from the episodic memory.

7. The computer-implemented method of any one of the preceding claims, **characterized in that** the method comprises the step of training the working memory by combining a cross-entropy loss on the interleaved samples with a knowledge retrieval loss on the random samples from the episodic memory.

8. The computer-implemented method of any one of the preceding claims, **characterized in that** the step of training the working memory is followed by the step of stochastically updating the long-term memory.

9. The computer-implemented method of any one of the preceding claims, **characterized in that** the method comprises the step of employing a k-winner-take-all activation function, wherein an activation score is assigned to each filter in a current layer by calculating an absolute sum of an activation map of said current layer, and by propagating the activation map of top-k filters to a next layer while setting the activation map of non-propagated filters to zero.

10. The computer-implemented method of any one of the preceding claims, **characterized in that** the method comprises the step of setting a sparsity ratio for each layer of the network wherein earlier layers have a lower sparsity ratio than later layers.

11. The computer-implemented method of any one of the preceding claims, **characterized in that** the method comprises the step of utilizing two sets of activation trackers:

   - a global activity count for tracking the activation count of each neuron throughout the training; and
   - a class-wise activity count for tracking the activation count of each neuron processing samples belonging to a particular class.

12. The computer-implemented method of any one of the preceding claims, **characterized in that** the method comprises the step of employing heterogeneous dropout for each task wherein new classes are learned by using neurons having the lowest class-wise activity count for previously seen classes and by setting a probability of a neuron being dropped to be inversely proportional to the global activity count of said neuron.

13. The computer-implemented method of any one of the preceding claims, **characterized in that** the method comprises the step of emerging class-wise activations followed by the step of employing semantic dropout wherein a probability of retention of a neuron for a class is set to be proportional to the class-wise activity count of said neuron for said class.

14. The computer-implemented method of any one of the preceding claims, **characterized in that** the method comprises the step of updating probabilities for semantic dropout and heterogeneous dropout at an end of each epoch and each task respectively for enforcing an emerged pattern.

15. A computer-readable medium provided with a computer program, **characterized in that** when said computer program is loaded and executed by a computer, said computer program causes the computer to carry out the steps of the computer-implemented method according to any one of claims 1-14.

16. An autonomous vehicle comprising a data processing system loaded with a computer program, **characterized in that** said program is arranged for causing the data processing system to carry out the steps of the computer-implemented method according to any one of claim 1-14 for enabling said autonomous vehicle to continually adapt and acquire knowledge from an environment surrounding said autonomous vehicle.

**Amended claims in accordance with Rule 137(2) EPC.**

1. Computer-implemented method for continual learning in an artificial neural network comprising the step of training a working memory by using a continuous data stream containing a sequence of tasks, **characterized in that** the method comprises the steps of:

   - maintaining a long-term memory by progressively aggregating synaptic weights of the working memory as tasks are sequentially learned by said working memory;
   - maintaining an instance-based episodic memory; and
   - enforcing activation sparsity along with a complementary dropout mechanism by activating similar neurons for semantically similar tasks while reducing overlap among neural activations for samples belonging to different tasks by:
   - employing a k-winner-take-all activation function, wherein an activation score is assigned to each filter in a current layer by calculating an absolute sum of an activation map of said current layer, and by propagating the activation map of top-k filters to a next layer while setting the activation map of non-propagated filters to zero;
   - utilizing two sets of activation trackers:

      ◦ a global activity count for tracking the activation count of each neuron throughout the training; and
      ◦ a class-wise activity count for tracking the activation count of each neuron processing samples belonging to a particular class;

   - employing heterogeneous dropout for each task wherein new classes are learned by using neurons having the lowest class-wise activity count for previously seen classes and by setting a probability of a neuron being dropped to be inversely proportional to the global activity count of said neuron.
   - emerging class-wise activations followed by the step of employing semantic dropout wherein a probability of retention of a neuron for a class is set to be proportional to the class-wise activity count of said neuron for said class.

2. The computer-implemented method of claim 1, **characterized in that** the method comprises the step of initializing the long-term memory by using weights and sparsity constraints of the working memory.

3. The computer-implemented method of claim 1 or 2, **characterized in that** the step of maintaining a long-term memory by aggregating the synaptic weights of the working memory comprises the step of calculating an exponentially moving average of the synaptic weights of the working memory in a stochastic manner.

4. The computer-implemented method of any one of the preceding claims, **characterized in that** the method comprises the step of assigning a fixed size to the instance-based episodic memory.

5. The computer-implemented method of any one of the preceding claims, **characterized in that** the step of maintaining an episodic memory comprises the step of maintaining said episodic memory with reservoir sampling by assigning to each incoming sample of the continuous data stream equal probability of being represented in the episodic buffer.

6. The computer-implemented method of any one of the preceding claims, **characterized in that** the method comprises the step of interleaving samples from a current task with random samples from the episodic memory.

7. The computer-implemented method of any one of the preceding claims, **characterized in that** the method comprises the step of training the working memory by combining a cross-entropy loss on the interleaved samples with a knowledge retrieval loss on the random samples from the episodic memory.

8. The computer-implemented method of any one of the preceding claims, **characterized in that** the step of training the working memory is followed by the step of stochastically updating the long-term memory.

9. The computer-implemented method of any one of the preceding claims, **characterized in that** the method comprises the step of setting a sparsity ratio for each layer of the network wherein earlier layers have a lower sparsity ratio than later layers.

10. The computer-implemented method of any one of the preceding claims, **characterized in that** the method comprises the step of updating probabilities for semantic dropout and heterogeneous dropout at an end of each epoch and each task respectively for enforcing an emerged pattern.

11. A computer-readable medium provided with a computer program, **characterized in that** when said computer program is loaded and executed by a computer, said computer program causes the computer to carry out the steps of the computer-implemented method according to any one of claims 1-10.

12. An autonomous vehicle comprising a data processing system loaded with a computer program, **characterized in that** said program is arranged for causing the data processing system to carry out the steps of the computer-implemented method according to any one of claim 1-10 for enabling said autonomous vehicle to continually adapt and acquire knowledge from an environment surrounding said autonomous vehicle.

Fig. 1

Fig. 2

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ELAHE ARANI ET AL: "Learning Fast, Learning Slow: A General Continual Learning Method based on Complementary Learning System", ARXIV.ORG, CORNELL UNIVERSITY LIBRARY, 201 OLIN LIBRARY CORNELL UNIVERSITY ITHACA, NY 14853, 10 May 2022 (2022-05-10), XP091217140, * Algorithms 1 and 2; figure 1 * ----- | 1-16 | INV. G06N3/045 G06N3/0464 G06N3/082 G06N3/084 G06N3/09 |

TECHNICAL FIELDS
SEARCHED     (IPC)

G06N

The present search report has been drawn up for all claims

| Place of search | Date of completion of the search | Examiner |
|---|---|---|
| The Hague | 21 June 2023 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## REFERENCES CITED IN THE DESCRIPTION

### Patent documents cited in the description

- US 2021150345 A

### Non-patent literature cited in the description

- **ALI ABBASI ; PARSA NOORALINEJAD ; VLADIMIR BRAVERMAN ; HAMED PIRSIAVASH ; SOHEIL KOLOURI.** Sparsity and heterogeneous dropout for continual learning in the null space of neural activations. *arXiv:2203.06514,* 2022
- **SUBUTAI AHMAD ; LUIZ SCHEINKMAN.** How can we be so dense? the benefits of using highly sparse representations. *arXiv:1903.11257,* 2019
- **RAHAF ALJUNDI ; EUGENE BELILOVSKY ; TINNE TUYTELAARS ; LAURENT CHARLIN ; MASSIMO CACCIA ; MIN LIN ; LUCAS PAGE-CACCIA.** Online continual learning with maximal interfered retrieval. *Advances in Neural Information Processing Systems,* 2019, 11849-11860
- **RAHAF ALJUNDI ; MIN LIN ; BAPTISTE GOUJAUD ; YOSHUA BENGIO.** Gradient based sample selection for online continual learning. *Advances in Neural Information Processing Systems,* 2019, 11816-11825
- **ELAHE ARANI ; FAHAD SARFRAZ ; BAHRAM ZONOOZ.** Learning fast, learning slow: A general continual learning method based on complementary learning system. *International Conference on Learning Representations,* 2021
- Human memory: A proposed system and its control processes. **RICHARD C ATKINSON ; RICHARD M SHIFFRIN.** Psychology of learning and motivation. Elsevier, 1968, vol. 2, 89-195
- **ALISON L BARTH ; JAMES FA POULET.** Experimental evidence for sparse firing in the neocortex. *Trends in neurosciences,* 2012, vol. 35 (6), 345-355
- **PRASHANT BHAT ; BAHRAM ZONOOZ ; ELAHE ARANI.** Consistency is the key to further mitigating catastrophic forgetting in continual learning. *arXiv:2207.04998,* 2022
- **SAYNA EBRAHIMI ; SUZANNE PETRYK ; AKASH GOKUL ; WILLIAM GAN ; JOSEPH E GONZALEZ ; MARCUS ROHRBACH et al.** Remembering for the right reasons: Explanations reduce catastrophic forgetting. *International Conference on Learning Representations,* 2020
- Orthogonal gradient descent for continual learning. **MEHRDAD FARAJTABAR ; NAVID AZIZAN ; ALEX MOTT ; ANG LI.** International Conference on Artificial Intelligence and Statistics. PMLR, 2020, 3762-3773
- **SEBASTIAN FARQUHAR ; YARIN GAL.** Towards robust evaluations of continual learning. *arXiv:1805.09733,* 2018
- **PETER FOLDIAK.** Sparse coding in the primate cortex. *The handbook of brain theory and neural networks,* 2003
- **PETER FOLDIAK ; DM ENDRES.** *Sparse coding,* 2008
- **RAIA HADSELL ; DUSHYANT RAO ; ANDREI A RUSU ; RAZVAN PASCANU.** Embracing change: Continual learning in deep neural networks. *Trends in cognitive sciences,* 2020, vol. 24 (12), 1028-1040
- **DAVID ISELE ; AKANSEL COSGUN.** Selective experience replay for lifelong learning. *Proceedings of the AAAI Conference on Artificial Intelligence,* 2018, vol. 32
- **ABHIRAM IYER ; KARAN GREWAL ; AKASH VELU ; LUCAS OLIVEIRA SOUZA ; JEREMY FOREST ; SUBUTAI AHMAD.** Avoiding catastrophe: Active dendrites enable multi-task learning in dynamic environments. *arXiv:2201.00042,* 2021
- Evidence of brain modularity. **A KELKAR ; JD MEDAGLIA.** Encyclopedia of Evolutionary Psychological Science. Springer, 2018
- **JAMES KIRKPATRICK ; RAZVAN PASCANU ; NEIL RABINOWITZ ; JOEL VENESS ; GUILLAUME DESJARDINS ; ANDREI A RUSU ; KIERAN MILAN ; JOHN QUAN ; TIAGO RAMALHO ; AGNIESZKA GRABSKA-BARWINSKA et al.** Overcoming catastrophic forgetting in neural networks. *Proceedings of the national academy of sciences,* 2017, vol. 114 (13), 3521-3526
- **GIRI P KRISHNAN ; TIMOTHY TADROS ; RAMYAA RAMYAA ; MAXIM BAZHENOV.** Biologically inspired sleep algorithm for artificial neural networks. *arXiv:1908.02240,* 2019

- **SIDNEY R LEHKY ; KEIJI TANAKA ; ANNE B SERENO.** Pseudosparse neural coding in the visual system of primates. *Communications biology,* 2021, vol. 4 (1), 1-12
- **ZHIZHONG LI ; DEREK HOIEM.** Learning without forgetting. *IEEE transactions on pattern analysis and machine intelligence,* 2017, vol. 40 (12), 2935-2947
- **DAVID LOPEZ-PAZ ; MARC'AURELIO RANZATO.** Gradient episodic memory for continual learning. *Advances in neural information processing systems,* 2017, 6467-6476
- **WOLFGANG MAASS.** On the computational power of winner-take-all. *Neural computation,* 2000, vol. 12 (11), 2519-2535
- **JAMES L MCCLELLAND ; BRUCE L MCNAUGHTON ; RANDALL C O'REILLY.** Why there are complementary learning systems in the hippocampus and neocortex: insights from the successes and failures of connectionist models of learning and memory. *Psychological review,* 1995, vol. 102 (3), 419
- **QUANG PHAM ; CHENGHAO LIU ; STEVEN HOI.** Dualnet: Continual learning, fast and slow. *Advances in Neural Information Processing Systems,* 2021, vol. 34, 16131-16144
- **AMAL RANNEN ; RAHAF ALJUNDI ; MATTHEW B BLASCHKO ; TINNE TUYTELAARS.** Encoder based lifelong learning. *Proceedings of the IEEE International Conference on Computer Vision,* 2017, 1320-1328
- **MATTHEW RIEMER ; IGNACIO CASES ; ROBERT AJEMIAN ; MIAO LIU ; IRINA RISH ; YUHAI TU ; GERALD TESAURO.** Learning to learn without forgetting by maximizing transfer and minimizing interference. *arXiv:1810.11910,* 2018
- **HIPPOLYT RITTER ; ALEKSANDAR BOTEV ; DAVID BARBER.** Online structured laplace approximations for overcoming catastrophic forgetting. *Advances in Neural Information Processing Systems,* 2018, 3738-3748
- **FAHAD SARFRAZ ; ELAHE ARANI ; BAHRAM ZONOOZ.** Synergy between synaptic consolidation and experience replay for general continual learning. *arXiv:2206.04016,* 2022
- **JEFFREY S VITTER.** Random sampling with a reservoir. *ACM Transactions on Mathematical Software (TOMS),* 1985, vol. 11 (1), 37-57
- **ZIFENG WANG ; ZIZHAO ZHANG ; SAYNA EBRAHIMI ; RUOXI SUN ; HAN ZHANG ; CHEN-YU LEE ; XIAOQI REN ; GUOLONG SU ; VINCENT PEROT ; JENNIFER DY et al.** Dualprompt: Complementary prompting for rehearsal-free continual learning. *arXiv:2204.04799,* 2022
- **ZIFENG WANG ; ZIZHAO ZHANG ; CHEN-YU LEE ; HAN ZHANG ; RUOXI SUN ; XIAOQI REN ; GUOLONG SU ; VINCENT PEROT ; JENNIFER DY ; TOMAS PFISTER.** Learning to prompt for continual learning. In. *Proceedings of the IEEE/CVF Conference on Computer Vision and Pattern Recognition,* 2022, 139-149
- **CHANG XIAO ; PEILIN ZHONG ; CHANGXI ZHENG.** Enhancing adversarial defense by k-winners-take-all. *arXiv:1905.10510,* 2019
- **FRIEDEMANN ZENKE ; BEN POOLE ; SURYA GANGULI.** Continual learning through synaptic intelligence. *Proceedings of machine learning research,* 2017, vol. 70, 3987
- Knowledge distillation beyond model compression. **SARFRAZ, FAHAD ; ELAHE ARANI ; BAHRAM ZONOOZ.** 2020 25th International Conference on Pattern Recognition (ICPR). IEEE, 2021
- **BHAT, PRASHANT ; BAHRAM ZONOOZ ; ELAHE ARANI.** Task Agnostic Representation Consolidation: a Self-supervised based Continual Learning Approach. *arXiv:2207.06267,* 2022